# EUROPEAN PATENT APPLICATION

(11) **EP 1 145 648 A1**
(43) Date of publication of application: **17.10.2001**
(21) Application number: 01303357.6
(22) Date of filing: 10.04.2001
(51) Int. Cl.: A23L 1/211, A23J 3/16

(54) **Low-cost soy proteinacaous food ingredients**

(30) Priority: 10.04.2000 US 546450
(71) Applicant: KRAFT FOODS, INC., Northfield, Illinois 60093 (US)
(72) Inventor: Silver, Richard, S., Wilmette Illinois 60091 (US)
(74) Representative: Eyles, Christopher Thomas

(57) **Abstract**

This invention discloses a method for preparing a lactic acid fermented soy proteinaceous food ingredient having reduced levels of those oligosaccharides that lead to abdominal discomfort due to gas production when ingested by a mammal, compared to the levels present in crude soy materials. The method employs a source of glycosidase activity that is effective to hydrolyze the oligosaccharides to a fermentable saccharide; and a lactic fermentation to provide the ingredient. The invention additionally discloses a process for preparing a food product containing the lactic acid fermented soy proteinaceous food ingredient. Examples of food products which may be provided include process cheeses, cottage cheese, cream cheeses, yogurts, puddings, pastas, meat products, meat substitutes, tofu, cereals, and beverages.

## Description

### FIELD OF THE INVENTION

This invention relates to a novel soy proteinaceous food ingredient from which undesirable flatulence-inducing oligosaccharides have been removed while, at the same time, conserving the desirable isoflavone components. Such soy proteinaceous food ingredient can be prepared by means of a simple, low-cost process involving simultaneous treatment of crude soy protein-containing materials with a source of glycosidase activity and a lactic acid-producing culture. The low-cost soy proteinaceous food ingredient may be used in the manufacture of a variety of finished food products.

### BACKGROUND OF THE INVENTION

Soy derived compositions have been subjected to various enzyme treatments to transform their properties or to reduce the content of certain components. U.S. Patent 4,478,854 discloses the hydrolysis of polysaccharides from plants by treatment with an enzyme adapted to hydrolyze the water-soluble, protein binding, polysaccharide present in soy flour. In particular, the substrate polysaccharide, which is believed to be widespread in plant kingdom substances, is decomposed by use of conventional pectinases. This treatment can be used to clarify juices, wines and beers, hydrolyze process wastes such as sugar beet pulp, pomace, and soy milk remanence, improve the digestability of silage, and reduce the viscosity of wort.

U.S. Patent 4,806,367 relates to treating soybean milk with protease under conditions wherein neither acid nor magnesium coagulation occurs. The protein in the treated soybean milk is then flocculated to provide a food material with good mouthfeel and high processability. U.S. Patent 5,100,679 discloses a process for making a proteinaceous product which comprises preparing a relatively viscous aqueous slurry of soy protein; treating the slurry by adjusting the pH to about 3.5 to about 6; adding a viscosity reducing agent selected from among a proteolytic enzyme, a carbohydrase enzyme, an antioxidant, and mixtures thereof, to form a pretreated slurry; heating the pretreated slurry to a temperature not greater than 155°C. such that the pretreated slurry does not contain a substantial amount of proteinaceous anti-nutritional or antigenicity factors; treating the pretreated slurry with a hydrolyzing agent from a source of alpha-galactosidase; and drying the proteinaceous material to form a soy product. The pretreatment of the soy slurry causes partial degradation of the non-starch polysaccharides which results in a significant reduction in the slurry viscosity before the heat treatment and during further processing. The patent discloses that this permits the solids content of the slurry to be increased which reduces drying costs and results in overall process economy. In a preferred embodiment, the alpha-galactosidase hydrolyzing agent also includes a carbohydrase enzyme for further degradation of non-starch polysaccharides, thereby resulting in further lowering of the slurry viscosity. A protease type of enzyme can also be added to the hydrolyzing agent with or without the carbohydrase enzyme.

PCT Publication WO95/27406 provides a dietetic soy based product which is high in soluble dietary fibers but which contains only negligible amounts of phytate, stachyose and raffinose. The dietetic soy-based product is reported to be relatively cheap and to exhibit good organoleptic properties. Such a product is prepared by adding the enzymes phytase, alpha-galactosidase, and plant cell wall polysaccharide solubilizing enzymes to a suspension of soy-based raw material in water.

PCT Publication WO98/12209 relates to a method for isolating proteins from vegetable sources by subjecting the vegetable proteinaceous material to the action of one or more carbohydrate degrading enzymes. After the carbohydrate degradation step, the mixture is separated to isolate the proteins from the hydrolyzed carbohydrates. The enzymes disclosed for use are generally polysaccharide-degrading enzymes, and do not include enzymes such as alpha-galactosidase or beta-fructosidase.

A broad variety of fermentation processes is known that act on soy protein containing preparations. U.S. Patent RE 28,810 relates to a soy cheese that is made without milk solids by coagulating a fermented emulsion containing soy milk and a fat composition with about 0.05 to about 1.0 weight percent of a coagulant selected from among aldonic acid lactones, uronic acid lactones, and mixtures thereof, to form a curd. The fermentation relates to a mixture containing soy milk and fat, preferably a synthetic fat derived from animal fats (other than milk fat) and/or vegetable fats and having physico-chemical characteristics simulating those of milk fat, that is fermented with a conventional lactic acid forming cheese starter culture. A flavor producing proteolytic enzyme can be added to the soy milk before formation of the emulsion, to the emulsion prior to fermentation, or to the cooked curd without adversely affecting the texture and body of the resultant soy cheese.

U.S. Patent 3,937,843 discloses a process for preparing a bean odor-free soy bean product which comprises subjecting a soy milk to lactic fermentation in the presence of a lactic acid bacterium as a starter and subjecting the resultant fermented soy milk to distillation under reduced pressure. The soy bean product, which is free from normal "bean"odor associated with soy beans, is suitable for use in nutritional drinks or beverages due to its high protein concentration.

U.S. Patent 3,982,025 discloses a soy cheese spread having good spreadability, melting, and flavor characteristics. Soy milk is first fermented with a lactic acid-forming cheese starter culture to form a curd. The curd is mixed with an edible oil or fat, a cheese emulsifying melting salt, and water and then vigorously agitated at an elevated temperature to liquefy and emulsify the ingredients to form a paste-like product.

U.S. Patent 4,855,148 relates to a method for making a quasi-natural cheese fermented food from curds obtained by the lactic fermentation of soybean milk. The method involves the steps of: (i) shaping the curds treated in a conventional cheese-making manner to a solid form by compacting and pressing, thereby fixing said curds, and (ii) subjecting the fixed curds to fermentative ripening in a brewing material containing at least one type of koji as the substrate to which lactic acid bacteria and/or yeast are added.

U.S. Patent 5,006,350 provides a bacteria which releases a soybean protein clotting enzyme that is effective in the production of a new soybean protein food, such as for example, a soy-milk cheese or a soy-milk cream. U.S. Patent 5,597,594 relates to a cheese-like food prepared by using soybean milk from which 60% or more of the soluble saccharide fractions in the raw soybean have been removed. The process includes first filtering soybean milk with an ultrafiltration membrane (preferably with a molecular weight of 30,000 to 300,000) to remove soluble saccharide fractions. The soybean milk is then subjected to lactic acid fermentation using a conventional mesophilic lactic acid bacterium to form curds. After molding, fermenting, and maturing the curd, the resulting cheese-like food is said to resemble cheese prepared using milk as the raw material.

More recently, U.S. Patent 5,858,449 provided a method of preparing isoflavone-enriched soy products which can be used as ingredients in food products. To obtain the isoflavone-enriched product, a separately prepared soy flour having a stachyose content of less than 2 percent,a sucrose content of greater than 9 percent, and a total isoflavone content of greater than 2000 micrograms per gram (all based on dry weight) was treated with a solvent to preferentially remove the dietary fiber, collecting the soluble material by centrifugation or equivalent process, and drying the soluble material. The low-stachyose soy flour was obtained by either physically removing the stachyose or using genetically modified soy bean plants to produce low-stachyose soy beans.

As seen from the description of the current state of soy protein preparations described above, the application of soy materials in preparing intermediate food ingredients and/or food products still faces certain problems. Although the cost of crude soy materials such as soy flour is low, methods to make soy protein isolates and/or soy protein concentrates tend to be costly. Furthermore these processes, including the process of ultrafiltration, typically remove some or all beneficial ingredients such as the phytochemicals, including isoflavone components. Isoflavones are naturally occurring components of soybeans which are reported to have significant health benefits, such as, for example, reducing the risk of some types of cancer, reducing the risk of osteroporosis, and lowering serum cholesterol. Existing commercial processes for making soy protein isolates generally capture only about 3 to 35 percent of the isoflavones available in the starting material. Additional difficulties relate to a need in many of these processes to separate a protein-enriched (solids) fraction from an aqueous or solvent wash fraction. Yet another disadvantage of current technology is that processes that remove the undesirable oligosaccharides, and deplete the "beany" flavor components from crude soy materials are likewise very costly, since the soy protein concentrates and soy protein isolates that result therefrom cost from 5 to 30 times as much as the starting material.

Thus there remains a clear need for an inexpensive, simple and effective method for producing a soy protein food ingredient from which the undesirable flatulence-inducing oligosaccharides (i.e., stachyose and raffinose) have been largely depleted, and in which the isoflavone components have been largely retained. There further remains a need for a method for producing such soy ingredients that eliminates the need for a solid-liquid separation. The present invention addresses these needs.

### SUMMARY OF THE INVENTION

This invention discloses a method for preparing a low cost soy proteinaceous food ingredient having reduced levels of flatulence-inducing oligosaccharides and conserved levels of isoflavones as compared to the levels present in crude soy materials. The method includes the steps of:
(a) providing an aqueous crude soy material containing soy protein, flatulence-inducing oligosaccharides, and isoflavones; and
(b) simultaneous treating the aqueous crude soy material with (1) a source of glycosidase activity that is effective to hydrolyze the flatulenceinducing oligosaccharides to fermentable saccharides and (2) a lactic acid-producing culture that ferments the fermentable saccharide under conditions that promote glycosidase activity and lactic acid fermentation to produce the soy proteinaceous food ingredient having reduced levels of flatulence-inducing oligosaccharides and conserved levels of isoflavones as compared to the levels present in crude soy materials. The lactic acid-producing culture may also produce desirable flavor characteristics which improve the flavor of the finished food product. The crude soy material may be defatted or fat-containing.

For purposes of this invention, "simultaneous treatment" of the crude soy material with (1) a source of glycosidase activity and (2) a lactic acid-producing culture is intended to cover processes where both glycosidase and lactic acid activities are present and active at the same time for at least a portion of the treatment time. Thus, for example, the glycosidase enzymes and the lactic acid culture could be added at the same or different times. Generally, however, it is preferred that both are added at the same time or that the glycosidaseactivity is added first followed by lactic acid activity. Significantly, the flatulence-inducing oligosaccharides acted upon by the source of glycosidase activity include raffinose and/or stachyose.

For purposes of this invention, the phrase "reduced levels" of flatulence-inducing oligosaccharides is intended to indicate that the level of the flatulence-inducing oligosaccharides is reduced by an amount sufficient to avoid excessive flatulence when consumed at the current FDA recommended amounts (i.e., about 6.25 g of soy protein per meal). Generally, "reduced levels" indicate that the flatulence-inducing oligosaccharides are reduced by at least 20 percent, preferably by at least 50 percent, and more preferably by at least 75 percent, compared to levels in the starting crude soy material. Likewise, the phrase "conserved levels" of isoflavones is intended to indicate that the level of isoflavones in the soy proteinaceous food product is at least about 75 percent, and more preferably at least about 90 percent, of the isoflavones in the starting crude soy material. Generally, greater than about 90 percent, and preferably greater than about 99 percent, of the original isoflavones in the starting crude materials are captured or retained in the soy proteinaceous material.

In further significant embodiments, the crude soy material is chosen from the group consisting of soy flour, soy grits, soy milk, and mixtures thereof. The crude soy material may be defatted or non-defatted. In yet other significant embodiments, the source of glycosidase activity is a source of alpha-galactosidase activity, a source of beta-fructosidase activity, or mixtures thereof. Preferably, the source of alpha-galactosidase activity is an alpha-galactosidase enzyme; suitable alpha-galactosidase enzymes may be from an Aspergillus strain, a Monascus strain, a Bacillus strain, Mortierella, Penicillia, Saccharomyces, plant sources such as maize and coffee beans, and the like. Additionally, the source of beta-fructosidase activity may be a beta-fructosidase enzyme; suitable beta-fructosidase enzymes can be obtained from carrots and Jerusalem artichokes or microorganisms such as *Saccharomyces cerevisiae* (i.e., yeast), *Fusarium oxysporum*, *Bacillus stearothermophilus,* and the like. In further significant embodiments, the lactic acid-producing culture is chosen from among *Streptococcus cremoris, Streptococcus lactis*, *Streptococcus durans*, *Leuconostoc cremoris, Streptococcus diacetylactis*, *Lactobacillus acidophilus, Lactobacillus bulgaricus*, *Lactobacillus casei*, *Lactobacillus helveticus*, *Streptococcus faecalis, Streptococcus thermophilus,* and *Leuconostoc citrovorum,* and mixtures thereof. The soy proteinaceous food ingredient provided by this method retains most or essentially all of the isoflavones present in the crude soy material.

The significant reduction of flatulence-inducing oligosaccharides and the retention of high levels of isoflavones make the soy proteinaceous materials provided by this invention ideally suited for incorporation into a wide variety of food products. Such food products include, for example, process cheeses, cottage cheese, cream cheese, yogurt, puddings, pasta, meat products, meat substitutes, tofu, cereals, and beverages. Generally the flatulence-inducing oligosaccharides (i.e., these that lead to abdominal discomfort due to gas production when ingested by a monogastric mammal) are reduced by at least about 20 percent as compared to the levels in the original crude soy material. Preferably, the flatulence-inducing oligosaccharides are reduced by at least about 50 percent and more preferably by at least about 75 percent. At the same time, the amount of beneficial isoflavones remains essentially unchanged or only slightly reduced from levels found in the original crude soy material.

### DETAILED DESCRIPTION OF PREFERRED EMBODIMENTS

The present invention provides a method for preparing a soy proteinaceous food ingredient with reduced levels of flatulence-inducing, oligosaccharides (especially raffinose and stachyose) while retaining most or essentially all of the isoflavones present in the starting crude soy material. The soy proteinaceous food ingredient prepared by the method of this invention is ideally suited for use in a wide range of food products.

The method involves a minimum number of unit operations and reduces the need for capital-intensive equipment, and therefore is inexpensive to implement. As an example, the method eliminates a requirement for a solid-liquid separation. It also eliminates an ultrafiltration step used in certain processes known in the field. The soy protein food ingredient provided by the method has a greatly reduced level of the undesirable oligosaccharides while retaining most or all of the desirable isoflavone components.

A soy proteinaceous food ingredient provided by the methods of the present invention generally include soy protein-containing products in the form of a suspension, a slurry, a soy protein-containing paste, a soy coagulum, soy curd, and the like. An important property of the ingredient is that levels of oligosaccharides that lead to abdominal discomfort due to gas production when ingested by a mammal are significantly reduced, compared to the levels present in the starting crude soy materials. A further important attribute of the soy ingredient is that it retains most or essentially all of the isoflavones present in the starting crude soy materials.

The starting material employed in the methods of the invention may be any crude soy material, such as soy flour, soy grits, soy milk, and similar soy protein-containing starting materials. The term "soy milk" is intended to include any aqueous dispersion containing soy bean proteins with reduced levels of insoluble fiber. For example, soy milk is obtained by extraction of soy beans with water or aqueous alkali solution, if necessary, followed by removal of water-insoluble materials therefrom. Any of the crude soy materials employed may have been defatted or may be left untreated, such that the material remains with most or all of the oil originally present. If the crude soy material is supplied as a solid, such as a dry powder or particulate preparation, it is suspended in water to provide an aqueous fermentable soy composition; soy milk is already in the form of such an aqueous composition. The crude soy material further contains phytochemicals such as isoflavones which may provide numerous health benefits. In the methods of the invention, these isoflavones are retained essentially undiminished. The material additionally contains oligosaccharides, including, for example, raffinose and stachyose, which commonly are not hydrolyzed to nutrient saccharides nor absorbed to be metabolized by a monogastric mammal that consumes the soy material. They therefore remain available for fermentative degradation by the flora of the large intestine, producing gases and causing discomfort and flatulence. The present methods successfully remove a significant proportion of these oligosaccharides so that they, and their flatulence-inducing effects, are significantly reduced in the resulting soy food ingredient.

A major advantage of the present method is that the process conditions can be varied to give essentially any desired reduction in the flatulence-inducing oligosaccharides. Thus, the level of flatulence-inducing oligosaccharides can range from approximately 25 percent reduction up to about 90 percent or even up to almost 100 percent reduction. By controlling the amounts of glycosidase and lactic acid culture activities, time of treatment, treatment temperatures, pH levels, and the like, the level of reduction of the flatulence-inducing oligosaccharides can be widely varied. Generally, high levels of reduction in the flatulence-inducing oligosaccharides will increase processing costs and, in many case, may not be necessary to provide the desired physiologically benefit (i.e., reduction of flatulence associated with consuming the flatulence-inducing oligosaccharides). Recently, Suarez et al., "Gas Production in Humans Ingesting a Soybean Flour Derived from Beans Naturally Low in Oligosaccharides," Am. J. Clin. Nutr., 69, 135-39 (1999), suggested that a soy-based diet of less than about 0.5 g/meal of stachyose and raffinose did not trigger the undesirable physiological symptoms.

The crude soy material described above and employed in the present methods is prepared as an aqueous fermentable soy composition. A fraction of the soluble saccharides present in soy composition (e.g., sucrose) are fermentable by most lactic acid bacteria. Raffinose and stachyose, however, are not fermentable by most lactic acid bacteria. Treatment of the soy material with certain gylcosidic enzymes can convert raffinose and stachyose into sugars which can be fermented by lactic acid bacteria.

Suitable sources of glycosidase activity include, for example, alpha-galactosidase activity and beta-fructosidase activity. Preferably the source of alpha-galactosidase activity is an alpha-galactosidase enzyme. Such alpha-galactosidase enzymes can include, for example, fungal or bacterial alpha-galactosidases and mixtures thereof. A preferred alpha-galactosidase can be obtained from Valley Research , Inc., South Bend, Indiana, under the tradename AGS25. Alpha-galactosidase can also be produced from fungi of the Aspergillus strain, preferably Aspergillus niger and Aspergillus oryzae; the Monascus strain, preferably Monascus pilosus; and from bacteria from the Bacillus stain, preferably Bacillus stearothermophilus. Alpha-galactosidase can also be produced from Mortierella strain, Penicillia strain, Saccharomyces strain, and plant sources such as maize and coffee beans, and the like. Alternatively, a source of beta-fructosidase activity can be used. Suitable beta-fructosidase enzymes can be obtained from carrots and Jerusalem artichokes or microorganisms such as *Saccharomyces cerevisiae* (i.e., yeast), *Fusarium oxysporum*, *Bacillus stearothermophilus,* and the like. Any of these activities is effective to hydrolyze the oligosaccharides, such as the raffinose and the stachyose, to lower saccharides which are fermentable by the lactic acid fermenting bacterium. In the absence of the lactic acid-producing culture, however, the hydrolysis reactions become so slow that a significant amount of the flatulence-inducing oligosaccharides remain. By the addition of the lactic acid-producing culture, the hydrolysis reactions can be driven toward completion.

The lactic acid-producing culture to be used in the methods of the present invention may be any of the fermentation cultures which convert nutrient substrates, especially saccharides, to lactic acid. It is believed that in the methods of the present invention, the hydrolysis of the oligosaccharides by the action of the glycosidase activity generates additional fermentable substrates for the lactic acid culture to act upon. The additional fermentable substrates are then fermented by the lactic acid culture, thereby allowing further hydrolysis of the oligosaccharides. In this manner, the hydrolysis of the oligosaccharides tends to be driven towards completion, thereby reducing the levels of flatulence-inducing oligosaccharides derived from the crude soy materials. In this manner, it is believed, the oligosaccharides are largely consumed and ultimately converted by fermentation to lactic acid. It is further believed that removal of the product saccharides generated by the glycosidase activity by virtue of the fermentation prevents inhibition of the glycosidase by the products of its own activity. Lactic acid cultures that may be employed in the present invention include those that are employed in the fermentative production of various cheeses, yogurts, sour cream, and the like. Such cultures generally include, for example, lactic acid bacteria used for lactic fermentation belonging to the Lactobacillus genus, Streptococcus genus, Leuconostoc genus, Pediococcus genus, and the like. Specific examples of suitable lactic acid bacterium are *Streptococcus cremoris, Streptococcus lactis*, *Streptococcus durans*, *Leuconostoc cremoris, Streptococcus diacetylactis*, *Lactobacillus acidophilus, Lactobacillus bulgaricus, Lactobacillus casei*, *Lactobacillus helveticus*, *Streptococcus faecalis, Streptococcus thermophilus, Leuconostoc citrovorum,* and mixtures thereof. The fermentation induced by the lactic acid culture results in the production of lactic acid, and a drop in the pH of the fermenting composition concomitant with the acid production. Generally, the pH of the resulting soy proteinaceous food ingredient is in the range of about 3.8 to about 5.2, and preferably in the range of about 4.0 to about 4.8.

In conducting the method of the invention, an aqueous fermentable soy composition is formed from the crude soy material. The crude soy material will generally contain, in addition to soy protein, both flatulence-inducing oligosaccharides and beneficial isoflavones. Liquid crude soy materials such as, for example, soy milk can be used directly in the present process; of course, if desired, water and/or other components (e.g., additional soy protein) can be added. For solid, powdered, or particulate crude soy materials, an aqueous suspension or slurry is preferred. Generally the aqueous crude soy materials have solids in the range of about 10 to about 50 percent. Preferably, the solids content is between about 30 and 40 percent.

If desired, the aqueous fermentable soy composition may be pasteurized prior to treatment with glycosidase activity and the lactic acid cultures. Such pasteurization can be used to minimize the growth of adventitious microbes which might be present during treatment. Pasteurization can be carried in batch, semi-continuous, or continuous process. For example, the aqueous fermentable soy composition may be heated to a temperature of about 163°F (about 73°C) for about 15 minutes. After pasteurization, the composition is cooled to a suitable temperature (generally about 75 to about 115°F [about 24 to about 46°C]) before the glycosidase activity and lactic acid cultures are added.

The aqueous crude soy material is contacted with the source of glycosidase activity. The amount of glycosidase activity added should be sufficient to effectively hydrolyze the flatulence-inducing oligosaccharides within a reasonable period of time (generally about 1 to about 24 hours, and preferably about 2 to about 12 hours). Preferably. the glycosidase-treated composition is adjusted to a pH at which the source of glycosidase activity is in fact active and which will promote fermentation by the lactic acid culture. Generally, the initial pH is in the range of about 6 to 7, and preferably in the range of about 6.4 to about 6.6, to promote hydrolysis of the flatulence-inducing oligosaccharides.

The composition containing the aqueous fermentable soy composition is simultaneously treated with a source of glycosidase activity and a lactic acid fermenting culture. For purposes of this invention, "simultaneous treatment" requires that both glycosidase and lactic acid activities are present and active at the same time for at least a portion of the treatment time and the portion of the treatment time is sufficient to reduce the level of the flatulence-inducing oligosaccharides in the final soy proteinaceous product. Thus the glycosidase activity and the lactic acid culture may be added at the same time. Alternatively, the glycosidase activity may be added first so long as there remains significant glycosidase activity at the time the lactic acid culture is added. Alternatively, the lactic acid culture may be added first so long as there remains significant lactic acid activity at the time the glycosidase activity is added. Preferably the glycosidase activity and the lactic acid culture are added at the same time or the glycosidase activity is added first followed by addition of the lactic acid culture. Where the lactic acid culture is added at a later time and using a reaction tempeature of about 30 to about 45°C, it is generally preferred that the lactic acid culture is added about 0.5 to about 1 hour after the addition of the glycosidase activity. As noted above, the glycosidase activity converts non-fermentable flatulence-inducing oligosaccharides to fermentable mono- and di-saccharides. If only glycosidase activity is present, an equilibrium and/or an end product inhibition effect will be established and a significant amount of unconverted flatulence-inducing oligosaccarides will remain. By using the lactic acid culture to ferment the fermentable mono- and di-saccharides, the glycosidase reactions will be driven to completion or near-completion so that the flatulence-inducing oligosaccharides are reduced to acceptable levels.

The lactic acid culture ferments the fermentable saccharides produced by the action of the glycosidase on the oligosaccharides, as well as on other nutrient sources present in the composition. The culture- and glycosidase-treated composition is maintained at a temperature that simultaneously promotes glycosidase action on the oligosaccharides contained in the composition, and fermentation of the nutrient saccharides and other nutrients present in the composition. In general, the temperature is maintained between about 20 and about 45°C. It may be beneficial to control the pH by the addition of a suitable alkaline material to prevent excess acidity from developing. Such substances include, by way of nonlimiting example, sodium hydroxide, calcium carbonate, or ammonium hydroxide. If the pH of the composition were to drop below the favorable range for lactic acid culture metabolism, conversion of available sugars to lactic acid would be slowed. Generally, the optimal pH for the alpha-glycosidase enzyme is about 4 to 6.5. Most lactic acid cultures can operate in this range; a few, however, are know to slow down or stop growing if the pH falls below about 4.5. The alkaline substance may be added either entirely at the beginning of the process, or periodically titrated into the fermenting culture. The treated suspension is furthermore incubated at a temperature that promotes glycosidase activity and fermentation. Broadly, the temperature is maintained at about 20 to about 45°C, and preferably at about 32 to about 45°C.

With the pH and the temperature maintained at values that are effective for glycosidase activity to proceed, and for lactic acid fermentation to occur, the time required for a significant extent of hydrolysis of the oligosaccharides, and for a significant extent of fermentation, to proceed ranges from about 1 to about 24 hours; and preferably from about 2 to about 12 hours. At the conclusion of these operations, the soy food ingredient having reduced levels of the flatulence-inducing oligosaccharides is obtained as an aqueous slurry.

In general, if the solids content of the hydrolyzed and fermented aqueous composition is high enough, it will not be necessary to carry out a separation of any excess aqueous liquid from the fermented soy composition. For these reasons, an additional unit operation related to separating the slurry from excess liquid, a step that is required in many other types of soy protein preparation procedures, is avoided in the present method. This beneficially lowers the cost of carrying out the overall method. Furthermore, since such excess liquid does not have to be removed or separated, the isoflavone components that provide beneficial flavors to the soy food ingredient are retained. Generally the present soy proteinaceous food ingredient is used "as is" (i.e., in the form of the aqueous slurry). Thus, no separation, washing, extraction, or other liquid-based separations or purification are required in the present invention. If a dry soy proteinaceous food ingredient is desired, however, it can be obtained by spray drying.

The lactic acid fermented soy proteinaceous food ingredient prepared as described above is advantageously incorporated into a wide variety of food products. Depending on the food product intended, the soy protein food ingredient may be added to an intermediate or to a final composition employed in the preparation of the product. Examples of such food products include, by way of nonlimiting example, process cheeses, cottage cheese, cream cheese, yogurt, puddings, pasta, meat products, meat substitutes, tofu, cereals, beverages, and the like.

The following examples are intended to illustrate the invention and not to limit it. Unless otherwise noted, all percentages are by weight.

### Example 1.

Mechanically defatted soy flour (5-8% fat; about 7.5% stachyose plus raffinose; Iowa Soy Specialties, Des Moines, Iowa) was slurried with water to 20% solids. The pH of this slurry was 6.54. Three aliquots of the slurry were treated with alpha-galactosidase (AGS25, Valley Research, South Bend, Indiana) and a lactic acid-producing dairy culture *(Lactobacillus helveticus* and *Lactobacillus casei* mixture, LH-100, Rhodia, Madison, Wisconsin). The three aliquots were:

| Aliquot | Alpha-galactosidase (%) | Lactic Acid-producing Dairy Culture (%) |
|---|---|---|
| 1 | 0 | 0.0526 |
| 2 | 0.05 | 0.0526 |
| 3 | 0.1 | 0.0526 |

Each slurry was held for 16 hours at 40°C. At the end of this period, the pH of each slurry with was as follows: (1) Aliquot 1: pH of 4.25; (2) Aliquot 2: pH of 3.94; and (3) Aliquot 3: pH of 3.94. Aliquot 2 had a combined stachyose and raffinose level of about 71 percent less than Aliquot 1; Aliquot 3 had a combined stachyose and raffinose level of about 85 percent less than Aliquot 1.

### Example 2.

A defatted soy flour (Cargill, Cedar Rapids, Iowa) was mixed with water to obtain a 30% solids slurry. The slurry was simultaneously inoculated with about 5 percent of a lactic acid culture (mixture of Lactococus lactis and Streptococcus cremoris; Bulk Culture 0765, Kraft Cultures, Morton Grove, Illinois) and about 0.01 percent of alpha-galactosidase enzyme (AGS25, Valley Research Inc., South Bend, Indiana). The inoculated slurry was held at 35°C for 4 hours, during which time the pH dropped from 6.6 to 5.3. The combined level of stachyose and raffinose in the treated soy flour was found to have been reduced by about 22 percent relative to the untreated soy flour.

## Claims

1. A method for preparing a lactic acid fermented soy proteinaceous food ingredient with reduced levels of flatulence-inducing oligosaccharides and conserved levels of isoflavones, said method comprising:
(a) providing an aqueous crude soy material containing soy protein, flatulence-inducing oligosaccharides, and isoflavones; and
(b) simultaneously treating the aqueous crude soy material with (1) a source of glycosidase activity that is effective to hydrolyze the flatulence-inducing oligosaccharides to fermentable saccharides and (2) a lactic acid producing culture that ferments the fermentable saccharides,
wherein the simultaneous treatment is under conditions that promote glycosidase activity and lactic acid fermentation to produce the soy proteinaceous food ingredient having reduced levels of flatulence-inducing oligosaccharides and conserved levels of isoflavones as compared to levels present in the crude soy material.

2. A method according to claim 1, wherein the source of glycosidase activity and the lactic acid producing culture are added to the aqueous crude soy material at essentially the same time.

3. A method according to claim 1, wherein the source of glycosidase activity is added to the aqueous crude soy material before the lactic acid producing culture is added.

4. A method according to any of claims 1 to 3, wherein the flatulence-inducing oligosaccharides comprise raffinose, stachyose, or mixtures thereof.

5. A method according to any of claims 1 to 4, wherein the crude soy composition is soy flour, soy grits, soy milk, or mixtures thereof.

6. A method according to any of claims 1 to 5, wherein the source of glycosidase activity is a source of alpha-galactosidase activity, a source of beta-fructosidase activity, or sources of both alpha-galactosidase and beta-fructosidase activities.

7. A method according to claim 6, wherein the source of alpha-galactosidase activity is an alpha-galactosidase enzyme, and the source of beta-fructosidase activity is a beta-fructosidase enzyme.

8. A method according to claim 7, wherein the alpha-galactosidase enzyme is obtained from an Aspergillus, a Monascus strain, a Bacillus stain, a Mortierella strain, a Penicillia strain, or a Saccharomyces strain.

9. A method according to claim 7 or claim 8, wherein the beta-fructosidase enzyme is obtained from carrots, Jerusalem artichokes, *Saccharomyces cerevisiae*, *Fusarium oxysporum,* or *Bacillus stearothermophilus.*

10. A method according to any of claims 1 to 9, wherein the lactic acid-producing culture is chosen from the group consisting of *Streptococcus cremoris*, *Streptococcus lactis*, *Streptococcus durans*, *Leuconostoc cremoris*, *Streptococcus diacetylactis*, *Lactobacillus acidophilus, Lactobacillus bulgaricus, Lactobacillus casei*, *Lactobacillus helveticus*, *Streptococcus faecalis, Streptococcus thermophilus, Leuconostoc citrovorum*, and mixtures thereof.

11. A method according to any of claims 1 to 10, further comprising the step of incorporating the soy proteinaceous food ingredient in a food composition.

12. A method according to claim 11, wherein the food composition is a process cheese, a cottage cheese, a cream cheese, a yogurt, a pudding, a pasta, a meat product, a meat substitute, a tofu, a cereal, or a beverage.

13. A lactic acid fermented soy proteinaceous food ingredient comprising a composition prepared from a crude soy material and having (1) reduced levels of flatulence-inducing oligosaccharides that lead to abdominal discomfort due to gas production when ingested by a monogastric mammal, wherein the reduced levels are relative to the crude soy material and (2) most or essentially all of the isoflavones present in the crude soy material.

14. A food ingredient according to claim 13, wherein the flatulence-inducing oligosaccharides in the food ingredient are reduced by at least about 20 percent of the level in the crude soy material.

15. A food ingredient according to claim 14, wherein the flatulence-inducing oligosaccharides in the food ingredient are reduced by at least about 50 percent of the level in the crude soy material.
